Europäisches Patentamt

(19) European Patent Office

Office européen des brevets

(11) Publication number: **0 159 857**
**B1**

(12) **EUROPEAN PATENT SPECIFICATION**

(45) Date of publication of patent specification: 25.07.90

(21) Application number: 85302511.2

(22) Date of filing: 10.04.85

(51) Int. Cl.⁵: **G 02 B 6/44,** G 02 B 6/38

(54) Splice case for optical fibre cable.

(30) Priority: **11.04.84 GB 8409368**

(43) Date of publication of application:
**30.10.85 Bulletin 85/44**

(45) Publication of the grant of the patent:
**25.07.90 Bulletin 90/30**

(84) Designated Contracting States:
**AT BE CH DE FR GB IT LI NL SE**

(56) References cited:
**EP-A-0 043 570      DE-A-3 133 586**
**EP-A-0 077 115      US-A-4 373 776**

**PATENS ABSTRACTS OF JAPAN, vol. 8, no. 79,**
**(P-267) (1516), April 11, 1984. & JP-A-58 221 818**
**(FUJITSU K.K.) 23-12-1983**

**IEEE GLOBAL TELECOMMUNICATIONS**
**CONFERENCE, vol. 3 of 3, November 28**
**-December 1, 1983, San Diego, pages 1183-1189;**
**IEEE, New York, US E.Y. LOYTTY:"Installation,**
**splicing and testing of large cross-sectional**
**FT3C fiber optic cables**

**PATENTS ABSTRACTS OF JAPAN, vol. 7, no**
**290, (P-245) (1435), Decmber 24, 1983. & JP-A-58**
**162 918 (FUJITSU K.K.) 27-09-1983**

(73) Proprietor: **N.V. RAYCHEM S.A.**
**Diestsesteenweg 692**
**B-3200 Kessel-lo (BE)**

(72) Inventor: **Franckx, Joris Rene Isabella**
**Halmenhoek 7**
**B-2820 Bonheiden (BE)**
Inventor: **Doucet, Jos**
**Grenstraat 95**
**B-3200 Kessel-Lo (BE)**
Inventor: **Nolf, Jean-Marie Etienne**
**Bierbeekstraat 89**
**B-3040 Korbeek (BE)**

(74) Representative: **Benson, John Everett et al**
**Raychem Limited Intellectual Property Law**
**Department Faraday Road Dorcan**
**Swindon, Wiltshire SN3 5HH (GB)**

**Description**

The present invention relates to the provision of an environmental seal around a splice in one or more optical fibre cables.

Optical fibre cables comprise a bundle of optical fibres surrounded by a protective jacket. Since such cables are manufactured in finite lengths, any installation will in general require separate lengths of cable to be spliced together. A problem arises at the splice, not only in forming fibre splices of low light attenuation, but also in replacing the protective jacket which has to be removed in the region of the splice to expose the fibres. It is with this second problem that the present invention is concerned.

Splicing an optical fibre is a difficult business, requiring use of a machine for proper alignment of pairs of fibres before a permanent splice is made between each pair. The machine will of necessity be some short distance away from the ends of the intact portions of the cables to be joined, i.e. some distance from the ends of each cable jacket. The jacket of each cable to be joined may be stripped back a distance of, say, 1.5 m thereby exposing 1.5 m of optical fibres. It can be seen, therefore, that there is a further problem, namely the accommodation of a significant length of optical fibres within the environmental housing which is to replace the removed portions of cable jacket. Optical fibres are easily broken by being bent around too sharp a radius, and the housing must therefore provide some way of organizing the fibres along an acceptable path.

There are some further considerations. It will generally be desirable that any chosen fibre within the housing be accessible, and therefore the fibres, which may number hundreds, should be organized within the housing in a regular fashion. Also, some means of identifying each fibre is desirable, and such means may have to be by way of its location within the housing since colour coding of the fibre itself is difficult.

Various suggestions have been proposed for an optical fibre splice case which organizes the slack lengths of fibres and provides an environmentally sealed housing around them.

In European patent publication 0043570 there is proposed an optical fibre splice case through one side of which one cable enters and through an opposite side of which another cable enters. The ingoing cables are sealed to inlets of the case by shrinkable sleeves. Within the case is a series of plates, each with projections thereon around which are wound the spliced fibres, thereby storing the slack lengths in a path which does not result in damage to the fibres. Such a splice case is known as an in-line splice case (as opposed to a butt splice case) since the cables enter the case from opposite ends, or at least from widely spaced positions.

A similar series of plates for use in an in-line cable splice is disclosed in US-A-4266853. Here the plates are stacked one on top of another and are hinged to a carrier. The hinging allows a chosen plate to be revealed for attention to a fibre splice it carries.

Optical fibre cables may be, for example, buried, or aerial, suspended between poles. In each case in addition to providing environmental protection, some mechanical strength has to be provided, and particular attention has to be given to axial pull strength in the case of aerial installations. Many of the prior art designs provide for axial pull strength in the following way. The cables themselves may be provided with a steel wire core, around which the fibres are located. In addition to preventing excessive bending of the cable, the core can be used to transmit axial load through the splice case, thus eliminating axial load on the fibres themselves. The way this is done is to strip back the jacket of each cable in the usual way to expose sufficient lengths of fibres for the splicing process to be carried out. The metal core of one cable is then clamped to one end of the splice case and the core of the other cable is clamped to the opposite end of the splice case. Thus, any axial load is transmitted from one core in a line through the case to the other core. Such an arrangement is disclosed in European Patent Publication No. 0077115.

Various other designs for optical fibre splice cases are disclosed in DE-A-3006131, JP-A-55-127508, JP-A-55-127507, JP-A-55-100504 and JP-A-52-133146.

US-A-4373776 discloses a protection case for optical fibre splices in the form of an elongate box having ducts along each side and a plurality of packet members pivotally attached to the bottom of the case in overlapping relationship. A holder in each packet will hold at least one splice, or an attenuator and two associated splices. A cover fastens over the base of the case. The packets have the form of shallow boxes and extra fibre is coiled around in a packet, being retained by turned in edges of the top, sides and bottom.

Although most of the designs proposed in the prior art are likely to be satisfactory each has a disadvantage. The splice cases tend to be bulky, difficult to remove from a manhole or pole where they are located, and difficult to re-enter for repair or testing. We have discovered that these problems can be overcome by a simple modification to the arrangement of the cables and organizer plates.

In one aspect, the present invention provides an assembly capable of enclosing a butt splice between at least two optical fibre cables, which comprises:

a hollow article comprising a base plate and a hollow cover disengageable from the base plate, the base plate having at least two mutually adjacent outlets capable of receiving respective optical fibre cables;

the assembly having at least one optical fibre organizer housed within the article for storing a plurality of optical fibres in a path from one of the outlets to an other of the outlets, said path having a minimum radius of curvature no smaller that the minimum bend radius of said optical fibres; and

first means for connecting the base plate to the hollow cover and second means for connecting the at least one optical fibre organizer to the base plate such that when the first and second means are so connected the optical fibres are stored in at least one storage plane and characterized in that when the first means is disconnected the hollow cover is removable from the base plate by being moved along a direction which is substantially parallel to the storage plane, substantially parallel to each outlet direction at the base plate and substantially perpendicular to the base plate.

An enclosure formed from an assembly of this design can be made easy to re-enter because an end (i.e. the cover), rather than a middle portion, of the assembly can be removed. This is because the cables to be spliced enter the assembly from one end. The assembly can be of substantially tubular design of small diameter and length, the design of the internal organizer can be simplified, and a temporary seal (e.g. over night during a lengthy installation) around the organizer can be made using the cover rather than a wrap-around sheet. Furthermore, the assembly can be easily removed from a manhole or pole. This is because sufficient free cable will be available due to one of the ingoing cables having been bent in a curve in order to enter the assembly. (Imagine two horizontal cables to be spliced; one enters the assembly directly, and the other will curve through a semi-circle to enter the same end of the assembly). If an in-line cable splice is used, there is either no cable slack at all and the splice cannot be moved; or the cable needs to curve at both ends requiring a larger man-hole or more extensive cable pole fixings.

The base plate has two or more outlets, either as simple apertures or as tubular projections, and the cover preferably is generally cylindrical with one closed end, for example dome-shaped. The base plate mates with the open end of the dome to provide the hollow article. Some means of holding the two parts together will preferably be provided, although the two parts may simply be an interference fit. Examples of means for holding them together include screw-threads on the two parts, bayonet fixings on the two parts, catches on the two parts, a separate clamp, and a separate sealing band for example a heat-shrinkable or otherwise recoverable band. Mechanical holding of the two parts may be combined with some environmental sealing means such as a gasket, O-ring, mastic seal or adhesive bond. An adhesive bond could be used in the absence of any mechanical fixing.

The base is preferably so constructed to allow core blocking of the cables that pass through it. This may be done by providing a reservoir or means for constructing a reservoir into which an encapsulant can be pored or pumped. A portion of each cable stripped of its outer jacket passes through the reservoir such that introduction of an encapsulant, which may cure or otherwise solidify, provides core blocking or further seals the cable outlet, or screens the spliced fibres from any metal work present.

The outlets are preferably in the form of tubes protruding from the base (or other part) of the hollow article, and means is preferably provided for environmentally sealing the outlets to the cables that pass through them. For example, a clamp, such as a hose clamp, could be used around the tubular outlets. A second possibly is to provide an adhesive, a mastic, or other sealing material between the cables and the outlets. We prefer, however, that the outlets be heat-shrinkable or otherwise recoverable since a tight seal can thus be made between any given outlet and a wide variety of sizes of cables. Heat-recoverability may of course be used in conjunction with a sealing material such as a heat-activatable adhesive.

In general, the two or more outlets may be provided in two basic ways. Firstly they may be independent in the sense that the base (or other part) of the hollow article is moulded or otherwise formed with tubular outlets projecting therefrom at two or more separate positions. In a second technique one (or more) large outlet is provided on the hollow article, which is subsequently divided into the requisite number of smaller outlets; or, what may amount to the same thing, means is provided to obviate the re-entrant gaps that would otherwise provide leak paths between the two or more cables and the large conduit that carries them. This may be done either by providing a flexible seal around the two or more cables to change their combined re-entrant cross-sectional shape into a generally circular shape compatible with that of the outlet, or by using a branch-off clip (such as that disclosed in GB-A-1604981 or 1604985) to deform the outlet to match the cross-sectional shape of the cables. (These techniques are illustrated in the drawings.)

Whether or not independent conduits or a divided large conduit is used, a seal is preferably made or enhanced by the conduits or conduit being recovered into engagement with the cable or cables. Recovery is preferably brought about by heat. Heat may be supplied by a torch or a hot-air gun although neither of them can supply heat sufficiently locally to recover easily one only of several independent conduits. We prefer therefore to provide self-contained heating means, and the invention thus also provides an optical fibre splice case comprising: a hollow article having recoverable cable outlets with self contained heating means; and an optical fibre organizer.

The self-contained heating means preferably comprises an electrical heating means such as a resistive heating wire or a conductive polymer composition. We prefer that the electrical heating means is self-regulating with respect to temperature, and this may be achieved by using as the heater a polymeric composition loaded with a filler such as carbon to give a positive temperature coefficient of resistance. The heater may be a discrete heater in thermal contact with the recoverable outlets, or it may be integral with the outlets. Additionally or alternatively, the heater may have the function of activating a heat-activatable sealing material such as a hot-melt adhesive for further environmental sealing or engagement.

A preferred design of the optical fibre organizer will now be considered. The organizer preferably comprises one or more trays on each of which may be stored a length of one or more optical fibres. For example, an organizer may have 5 to 10, preferably about 8 or 10, trays, and each tray may store 5-24, preferably about 10 or 12, optical fibres. An optical fibre cable enters the assembly through one outlet, intermediate lengths of the fibres it contains are stored on the trays, and the cable leaves the assembly through another of the outlets. Since the primary function of the assembly is to house a cable splice, each tray will also hold the fibre splices themselves. A fibre splice may be made in a small transparent tube into each end of which is inserted one of the two fibres to be spliced. The tube contains a curable composition, which is caused to set once the fibres have been correctly aligned therein. The trays may be provided with means such as recesses or clips to hold these fibre splice tubes. The assembly of the invention may also be used to house an intermediate section of a cable, where the jacket has been removed for testing or access, and where no fibre splices are present.

The trays are preferably stacked one on top of another and attached in that configuration to a carrier which may be attached to or integral with the base or other part of the enclosure. The attachment should be such that any chosen tray may be removed or exposed in order to attend to an optical fibre it carries.

We prefer that the trays are rectangular and are attached by means of a short side to a base of the enclosure. The trays may be hinged in order that they can be rotated away from the splice closure axis. In particular they may be hinged along an edge, preferably a short edge, so as to be moveable to expose an underlying tray. The trays then extend lengthways away from the base and are covered by the cover. The trays should be made as small as possible consistent with the fibres they carry following a path having a minimum radius of curvature equal to the minimum bend radius of the fibres in question. Preferably the path is no smaller than the permanent bend radius of the fibres. The length of each tray will depend on the length of each fibre that is required for the splicing operation to be carried out and this will depend on the splicing technique. Also each fibre may be wound around its path on the organizer two, three or more times, thus increasing storage by factor of two, three or more. The extent to which this can be done will depend on the number of fibres to be stored on each tray and on the number of trays compared to the desired size of the assembly.

The path that each fibre follows on each tray is not critical, but for best use of space it will pass as close to each long edge as possible. A preferred path will therefore be oval, or rectangular with rounded short edges. Small pegs or other protrusions may be provided on each tray around which the fibres may be wound. The trays preferably have raised edges or rims to maintain a certain separation between them and to prevent fibre spillage from their edges. Each fibre preferably enters a tray along one long edge and leaves that tray from the opposite long edge. This arrangement allows shorter trays and better fibre organization than an alternative where the fibres enter and leave along the same long edge. In the case of a cable splice, the fibres will in general enter and leave each tray across the same short edge. An advantage of them entering across the same edge is that a space where the fibre bundles diverge from each cable to the various trays is only required at one end of the set of trays. Thus the splice case is shorter. If they enter across opposite short edges not only would the splice case be longer, it would also be of greater diameter due to the need for the fibre bundles to bend within the case and pass back down the case to pass through the outlets due to the overall butt-nature of the splice. This can only be avoided using an in-line splice.

The difficulty of making a splice between two optical fibres, and the need for a special splicing device were mentioned above. The entire operation of locating the cables to be joined, performing a large number of splices, storing the spliced fibres, and then environmentally sealing the resulting splices is quite complex. We have developed an apparatus for simplifying this procedure in the field, which locates in the preferred relationship all of the articles required.

This apparatus comprises:

a frame having means for holding a device for effecting an optical fibre splice, a releasable clamp for holding a base of an enclosure as defined above, and means for selectively exposing respective trays of an optical fibre splice organizer.

The invention is further illustrated with reference to the accompanying drawings, in which:

Figure 1 shows a partially dismantled butt splice case of the invention;

Figure 2 shows bases for an optical fibre splice case;

Figure 3 shows electrical connections to the base of Figure 2;

Figure 4 shows a part of a base for holding trays;

Figure 5 shows a butt splice case employing branch-off clips and a junction box;

Figure 6 shows a butt splice case employing branch-off clips;

Figure 7 shows the use of a flexible seal in a butt splice case;

Figure 8 shows construction of preferred electrically recoverable outlets;

Figure 9 illustrates fibre arrangements on trays of an optical fibre organizer;

Figure 10 shows a tray;

Figure 11 shows a splice holder; and

Figure 12 shows an apparatus for performing cable splicing and environmental sealing;

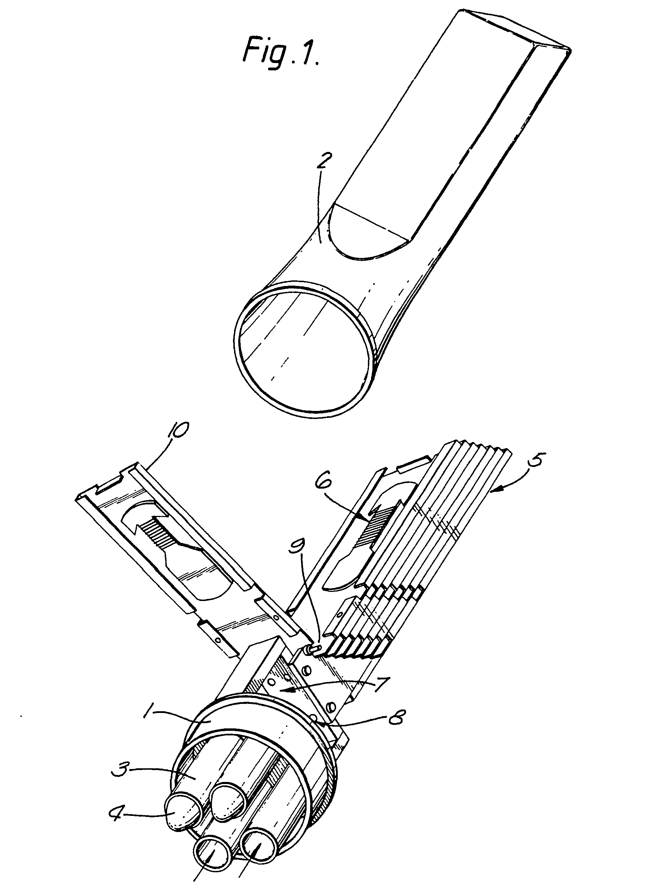

Figure 1 shows a base plate 1 and a dome-shaped cover 2 which together form an enclosure for use as a butt splice case for optical fibre cables. The base 1 is preferably manufactured by moulding from a glass-fibre filled high density polyethylene. Outlets 3 are provided in the base through which the cables pass. On a new installation, some only of the outlets 3 may be required, and some may therefore be temporarily blocked as shown at 4. Such blocking may be by any suitable means, but we prefer that the outlets be made with closed ends which are simply cut off as required. The dome-shaped cover may be blow-moulded and incorporate a moisture-vapour barrier such as a metal foil.

The hollow article contains an optical fibre organizer which comprises a series of trays 5. Each tray preferably includes means 6 for accommodating splice tubes which house the fibre splices. The trays are preferably held in an orderly fashion on a carrier 7 which is fixed to the base 1. The trays are shown hinged along their short edges, but other hinging for example pivoting for rotation e.g. about one corner in the plane of the trays could be provided. The hinging allows chosen trays to be exposed for installation of the splices or for repair etc. Means is preferably also provided for locking the trays in their hinged position.

The assembly of the invention may be used as follows. Firstly, pass the two cables to be spliced in the direction of the arrows through two of the outlets 3 such that, say 1.5 m of each cable protrudes into the splice case. The cable jackets are then removed back to the base 1 to expose 1.5 m of fibres. The strength core of each cable is then cut back, leaving enough remaining for it to be fastened into respective fastening holes 8. Each fibre of one cable is then spliced to the correct fibre of the other cable. Groups of say ten or twelve spliced fibres are then stored on each tray. When one tray is filled it is moved by hinging at 9 to expose another tray. Each tray preferably has a rim 10 to ensure a sufficient separation between adjacent trays and/or to prevent fibre slippage from each tray.

In Figure 1 the outlets 3 are shown as independent tubular projections, which are preferably produced by moulding integrally with the base. The outlets are preferably heat-shrinkable in order that seals can be made to the cables they carry.

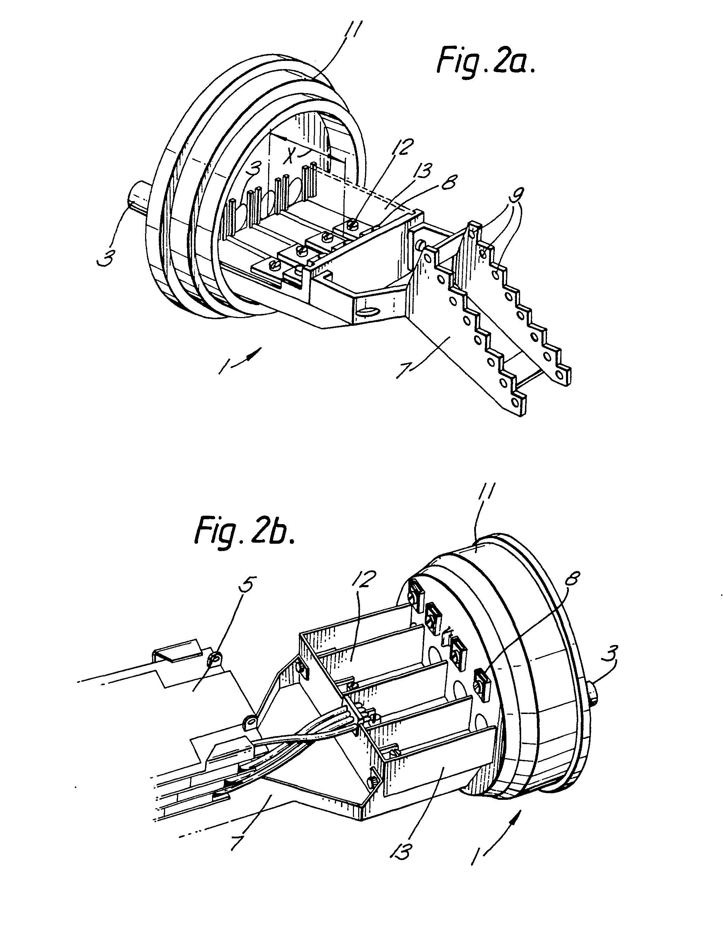

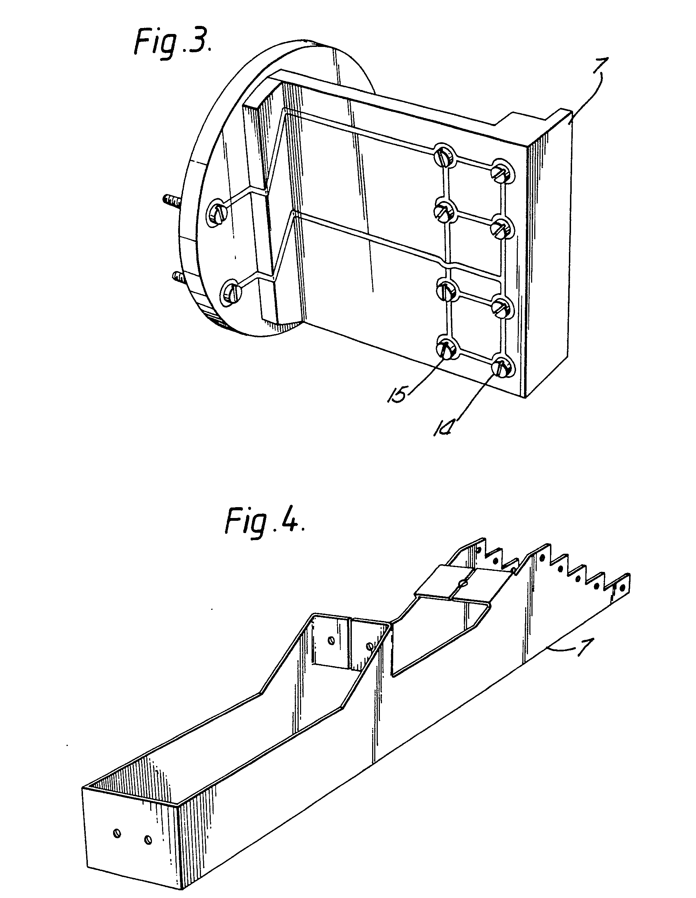

The base 1 shown in Figure 2a has some additional or alternative features to that shown in Figure 1. This base 1 comprises a moulded or otherwise formed part 11 to which is attached a carrier 7 to which trays may be hinged at positions 9. Cables enter the base through outlets 3. Provision is made for connecting (mechanically and/or electrically) a central core of the cable and/or a cable shield or outer strength member (for example a braid or tape wrap): the central strength member can be attached to connections 8 and the outer strength member (or shield) to connections 12. A connection 8 and connection 12 may be provided for each cable.

The base is so constructed that core blocking of the cables can be provided. A certain length of cable jacket is removed so that, when the cable is inserted through an outlet 3, the cable core is exposed over at least part of the distance X shown in the Figure.

A reservoir may be provided by plates or other means 13 which can be attached, for example by positioning in grooves on the base. An encapsulant may then be poured or forced into the reservoir to block the cable or to form a further seal at the cable outlet (i.e. in addition to the sleeves 3) or to protect the interior of the splice case from any metal work present (metal may cause liberation of hydrogen which can damage optical fibres).

A further novel variation is shown in Figure 2b, which shows several partially drawn trays 5 attached to a base 1 comprising a moulded part 11 and a carrier 7. In this embodiment connectors 8 for cable shielding or for outer strength members are attached to the moulded part. This can provide easy cable installation and easy fibre access. The dotted lines between connectors 8 indicate an electrically conductive strip between them that can be severed for example where it is shown pleated to isolate the two connectors at the left from the two at the right.

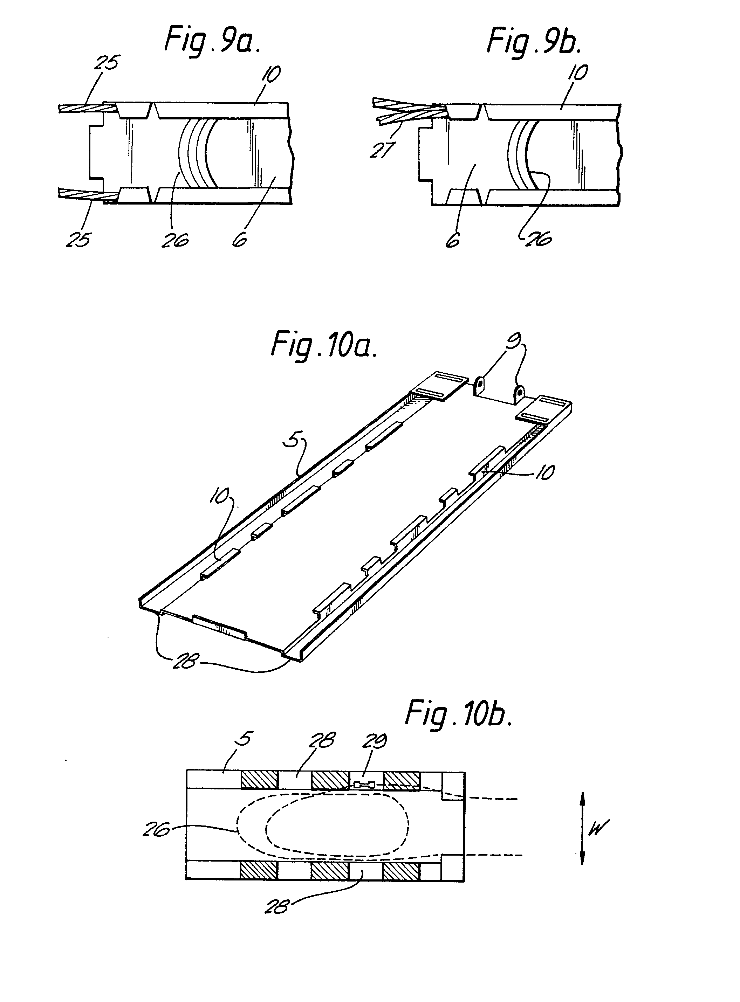

The tray partially shown, more fully shown in Figure 10, is of a design that allows the tray size to be minimized. Such trays can preferably hold splices of, say, 7.2 mm in width. Bend radii of at least 4.4 cm can easily be accommodated, allowing storage of monomode fibres.

In Figure 2b a single means 13 provides reservoirs for encapsulant for all of the cables simultaneously. Such means may be an integrally moulded part of the base.

A termination system is provided to aid branching of fibres or groups of fibres from the incoming cable to respective trays. The termination system illustrated comprises a series of tubes into which fibres can be fed running from the base to respective trays. The tubes may be held in groups (of say four) on a part of the base by a clip as shown.

The bases of Figures 2a and 2b may be used in in-line splice cases.

Figure 3 shows an underneath view of the bases shown in Figure 2. Electrical connections are shown to the sets of contacts 14 and 15. The connections are made such that selective cutting of them can result in any of the following: all cable central conductors and shields connected to the same point (or points); central conductors plus shields of respective cables to different points 3; and all central conductors to one point, and all shields to another point.

Figure 4 shows a design of carrier 7 made from sheet material.

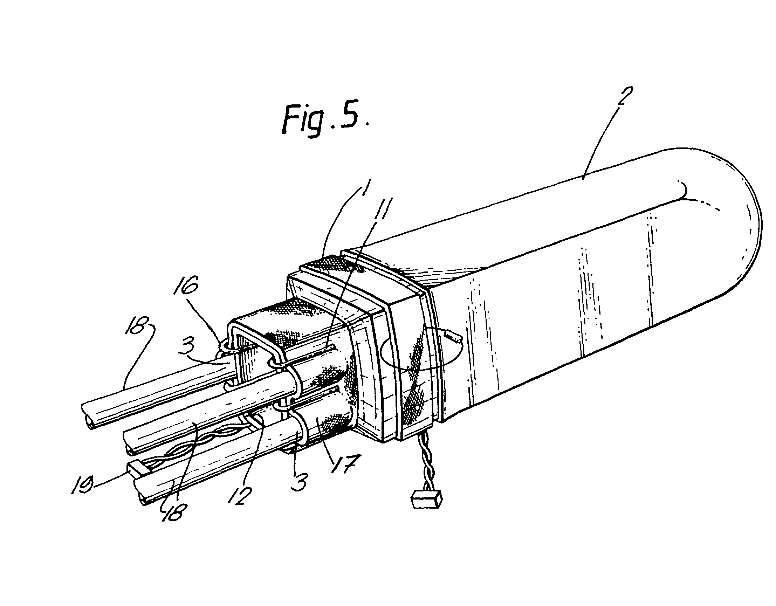

An alternative technique from that of Figure 1 of sealing the cables at their points of entry is shown in Figure 5. A series of branch-off clips 16 is used in conjunction with a junction box 17 to deform the outlet 3 to conform to the cables 18. The junction box is positioned within the outlet 3 and the cables pass between the box and the outlet. The branch-off clips cause the outlet to be deformed around the cables into proximity with the box. The outlet is again preferably heat-shrinkable. Figure 5 shows a further preferred feature which may be used in any of the embodiments; the outlet 3 is shrinkable by self-contained heating means, particularly by an electrical heater which is shown powered via conductors 19. Also shown is a band which joins together base and dome portions of the splice case. This band, which may also be electrically heat-shrinkable, is provided with self-contained cutting means for reentry into the splice case. A disadvantage of the use of one outlet 3 which is subdivided is that all cables are preferably installed in that outlet before recovery can be used to seal any of them. The independent outlets illustrated in Figure 1 allow independent sealing of each cable, and therefore an initial partial installation, followed by addition of further cables at a later date. The embodiment of Figure 5 could, however, be modified to allow for this by the use of blank plugs.

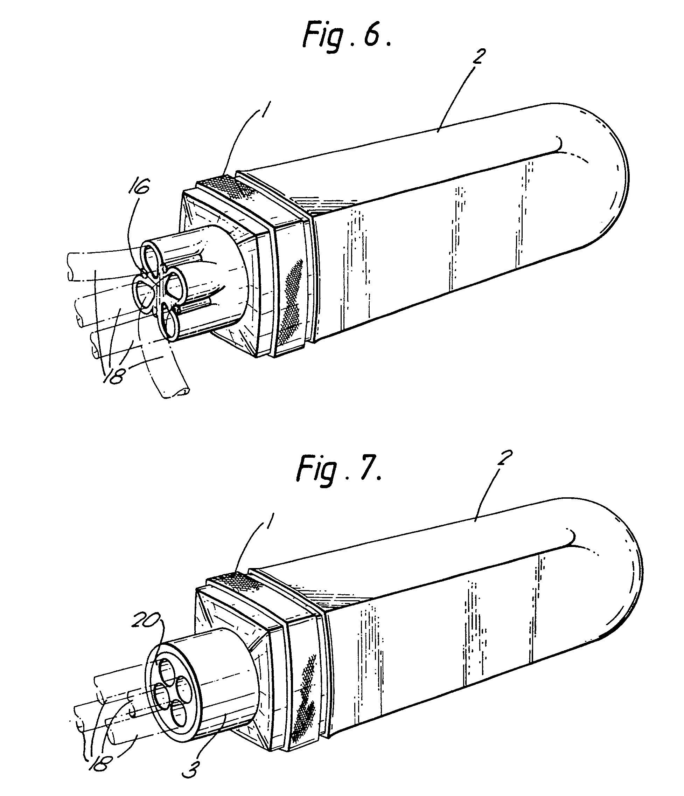

Figures 6 and 7 show alternative ways of using one large outlet to seal several cables. In Figure 6 a four legged branch-off clip or clips 16 is used, and in Figure 7 a flexible seal 20 (such as that disclosed in GB-A-2124439) is used around the cables to change their combined re-entrant cross-sectional shape into a circular shape compatible with the circular shape of the outlet 3. As before, the outlets 3 are preferably heat-shrinkable, especially by electrical power.

The base and the hollow cover may be attached together as follows.

An O-ring may be used to provide a seal between the two parts which are mechanically held together by a circular clamp. Alternatively, one may use a band of heat-shrinkable material (as shown in Figure 5) around the join line between the base and the cover. The band is preferably shrinkable by electrical power. Electrical heat-shrinkability here is conveniently used in conjunction with electrically shrinkable outlets.

Discrete electrically shrinkable outlets may be used, shrunk into engagement with the cables and projections on the base. The outlets in this case may be pre-shrunk onto such projections, leaving only shrinkage onto the cables to be performed in the field. Alternatively, the entire installation of the outlets could be performed in the field.

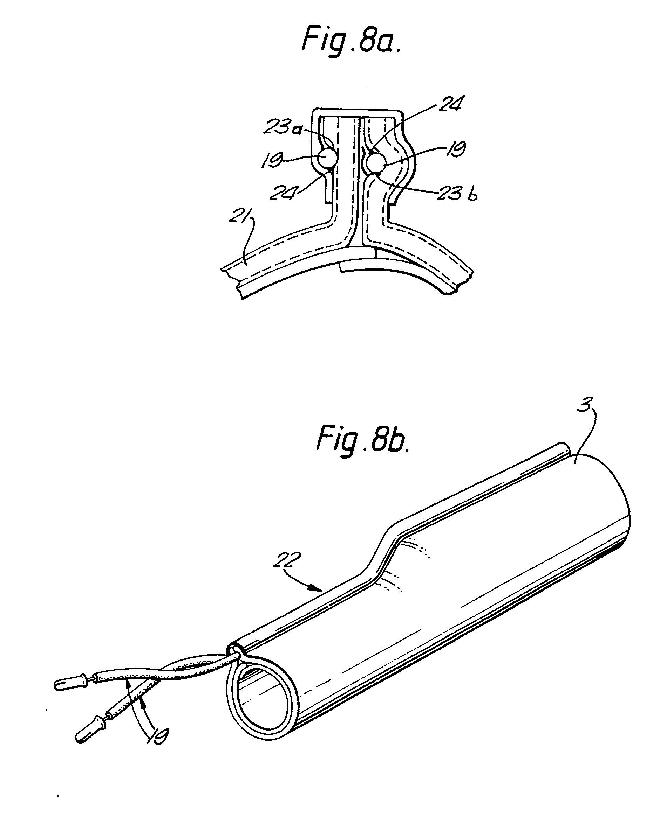

Figure 8 illustrates a preferred design of electrically shrinkable outlets, which is most applicable to discrete outlets. The material constituting the tubes 3 comprises a laminate of a recoverable conductive polymer composition 21 sandwiched between two perforated electrodes, shown dotted in Figure 8a. The electrodes are perforated to allow them to collapse as the outlet shrinks. Each electrode is covered with a layer of insulation. In the embodiment illustrated, the tubular outlets 3 are formed from sheet material by bringing together opposing edges and clamping or bonding them at region 22. At the edge regions, opposite layers of insulation 23a and 23b are removed to expose the two electrodes. We prefer that the electrical heating provided by the conductive polymer composition is self-regulating, and therefore a polymer exhibiting a positive temperature coefficient of resistance (PTC) is preferably used. In order to improve the electrical performance of the system electrical contact to the electrodes is preferably made via a resistance material of constant-wattage behaviour. This is achieved by providing a tape 24 of zero temperature coefficient of resistance (ZTC) as illustrated. The power is supplied via conductors 19. When electrical power is applied current flows through the thickness of the material 21, causing it to become hot and thus to shrink. In the outlet illustrated the heater and the heat-shrinkable material are one and the same; it is possible however to provide a discrete heater in thermal contact with a heat-recoverable outlet. The outlet shown is provided with an internal layer of a sealing material (shown cross-hatched). The sealing material is preferably heat-activatable, and we prefer a hot-melt adhesive.

The outlet shown in Figure 8b is stepped to accommodate the different sizes between the projection on the base and the cables it will carry.

Figure 9 shows in part rectangular trays 6 which may constitute an optical fibre organizer. Two fibre paths are illustrated. In Figure 9a a bundle of fibres 25 is shown entering the tray along one long edge and leaving along an opposite long edge. The fibres follow a generally oval path on the tray, one end of the oval being shown at 26 where the paths of several fibres or several turns of the same fibre are illustrated. In Figure 9b the fibre bundles 27 leave and enter along the same long edge. The arrangement of Figure 9a is preferred.

A design of another tray 5 (which may also be used in an in-line splice case) is shown in Figure 10a in perspective view, and in Figure 10b in plan view. The tray has a central first portion with retaining means in the form of a partial rim 10, and edge second portions 28 for storing splices 29 between fibres which are looped 26 on the tray between the rims 10. The portions 28 are preferably stepped below the general level of the tray in order to accommodate splices 29 which may include a small tube or other protective means of diameter greater than the fibre. This physical separation of the splices and the fibre loops simplifies installation and ease.

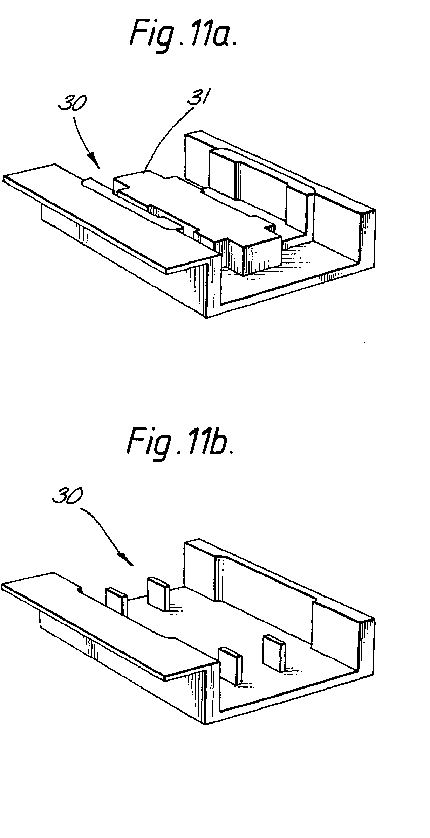

The dimension W should be at least equal to the minimum storage bend diameter of the fibre. This ensures that the fibre always follows a path of at least that diameter since the splice is accommodated on a wider portion of the tray. Each side of the tray shown may be designed for three splice holders (shown in Figure 11, but omitted from Figure 10) of a type that will accept two splices.

Thus, the tray will accept twelve splices, and we prefer that a splice case can hold at least eight trays, making a total of 96 splices.

An advantage of the design of Figure 10, over that of Figure 1 is that the ratio between straight sections of fibre to bends is larger, and this allows greater storage. Also, the bend radius of the fibre does not depend on the location of the splice on the tray nor on the amount of fibre slack. Asymmetric fibre lengths either side of the splice can be stored with easily.

The splice holder can be positioned as desired along the portions 28 and the number of splice holders that can be accepted will of course depend on their size. Figure 11 shows a type of splice holder 30 that can accept various different types of splices. The splice holder 30 may be integral with the tray, or it may be separate and attachable thereto by any suitable means, for example it may be an interference fit therein. In some circumstances it may simply rest on the tray. Figure 11a shows a splice holder 30 with an insert 31, allowing positioning of two splices comprising a dumb-bell shaped splice tube within which the ends of the two splice fibres are held (such a tube 29 is shown in Figure 10b). Removal of the insert 31, as in Figures 11b, allows other types of splice to be held.

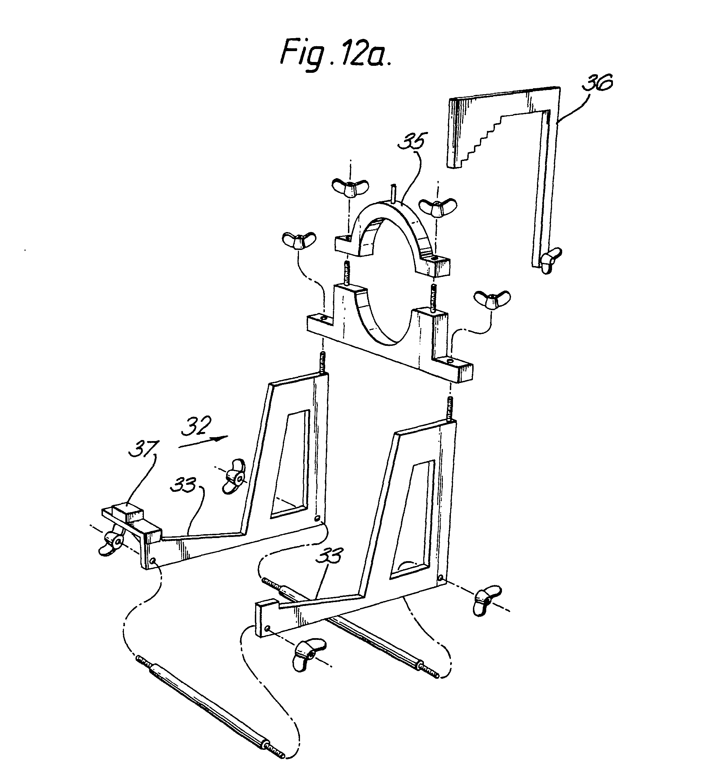

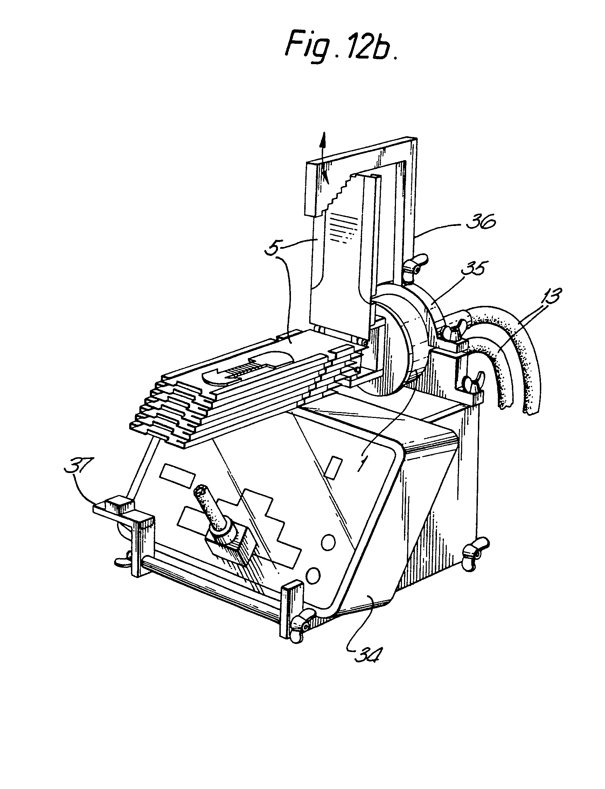

Figure 12 shows an apparatus 32 for carrying out a combined splicing and sealing operation. The apparatus 28 itself is shown at Figure 12a, and the apparatus in conjunction with a splicing machine 34 and an enclosure of the invention is shown in Figure 12b.

The apparatus 32 comprises: a frame having means 33 for holding the splicing device 34; a releasable clamp 35 for holding a butt splice case, or preferably a base 1 thereof; and means 36 for selectively exposing respective trays 5.

The component parts of a preferred frame are shown in Figure 12a and a detailed description is not necessary. A few features may, however, be mentioned. The means 33 for holding the splicing device may carry a microscope or may simply hold the splicing device at an angle, preferably 8-20°, especially about 15°, which makes viewing the device's own microscope easier. A cutter 37 is preferably provided to make a clean, properly angled, end to the fibres before splicing. The means 36 is preferably hinged so that the top bar can move as indicated by the arrow in Figure 12b, thus allowing selected trays to be held in the upright position.

## Claims

1. An assembly capable of enclosing a butt splice between at least two optical fibre cables, which comprises:

a hollow article comprising a base plate (1) and a hollow cover (2) disengageable from the base plate, the base plate having at least two mutually adjacent outlets capable of receiving respective optical fibre cables; the assembly having at least one optical fibre organizer (5) housed within the article for storing a plurality of optical fibres in a path from one of the outlets (3) to an other of the outlets (3), said path having a minimum radius of curvature no smaller than the minimum bend radius of said optical fibres; and

first means for connecting the base plate (1) to the hollow cover (2) and second means (7, 9) for connecting the at least one optical fibre organizer to the base plate (1) such that when the first and second means are so connected the optical fibres are stored in at least one storage plane and characterized in that when the first means is disconnected the hollow cover (2) is removable from the base plate (1) by being moved along a direction which is substantially parallel to the storage plane, substantially parallel to each outlet direction at the base plate and substantially perpendicular to the base plate.

2. An assembly according to claim 1, in which the outlets are recoverable, recovery effecting sealing engagement between outlets and cables they carry.

3. An assembly according to claim 1 or 2, in which each of said outlets comprises an independent tubular member.

4. An assemble according to any of claims 1 to 3, in which at least two of the outlets are formed from subdivision of a single tubular member.

5. An assembly according to any preceding claim, in which the outlets include a self-heating means comprising an electrical heater.

6. An assembly according to claim 5, in which the outlets comprises a recoverable conductive polymeric material.

7. An assembly according to claim 6, in which the conductive polymeric material exhibits positive temperature coefficient of resistance behaviour.

8. An assembly according to claim 1 which additionally comprises a band of recoverable material which can bridge a join line between the base and the cover and by means of which the base plate and the cover may be sealed together.

9. An assembly according to any preceding claim, in which the base plate has means for providing a reservoir for an encapsulant around a cable.

10. An assembly according to any preceding claim, in which the base plate has means for electrical and/or mechanical connection to a cable outer screen and/or strength member.

11. An assembly according to any preceding claim, in which the base plate has means for electrical and/or mechanical connection to a cable inner conductor or strength member.

12. An assembly according to any preceding claim in which the optical fibre organizer comprises one or more optical fibre trays.

13. An assembly according to claim 12, in which the trays are each hinged to a carrier, the hinge line running substantially perpendicular to the cables entering the base plate.

14. An assembly according to claim 12 or 13, in which the trays comprise a first portion which can accept a loop of optical fibre and a second portion at an edge of the first portion which can accept an optical fibre splice.

15. An assembly according to claim 14, in which the first portion has means for locating the loop.

16. An assembly according to claim 14 or 15, in which the trays additionally comprise a splice holder capable of locating a fiber splice on the second portion of the tray.

17. An assembly according to claim 16, in which the splice holder is adaptable to hold splices of different design.

18. An assembly according to any preceding claim, in which the outlets extend from the base plate so as to be substantially parallel to one another and to the storage plane.

19. An assembly according to any preceding claim, in which the optical fibre organizer comprises a plurality of trays connected to the base plate in a pivotable manner about a plurality of substantially parallel lines each of which is substantially parallel to the storage plane, each tray being capable of storing a plurality of the optical fibres in a plurality of secondary planes which are parallel to the storage plane, the pivoting parallel lines extending from the storage plain in a stair step manner.

20. An assembly according to claim 19, in which each of the pivoting parallel lines is substantially perpendicular to the direction the hollow cover is moved when being removed from the base plate.

21. An assembly according to any preceding claim, in which each optical fibre organizer is rectangular, the second means connecting a short side of each organizer to the base plate.

22. An assembly according to any preceding claim, in which the optical fibre organizer comprises a plurality of trays that are hinged along an edge thereof so that an overlying tray is moveable to expose an underlying tray.

23. An assembly according to claim 12, in which the tray or trays have raised edges to maintain a certain separation between them and to prevent fibre spillage from their edges.

24. An assembly according to any preceding claim, further comprising a tray carrier (7), the optical fibre organizer comprising a plurality of trays (5) attached to the carrier, said carrier being integral with or attached to the base plate and having fastening holes (8) to which a strength core of one of the cable may be attached.

25. An assembly according to any preceding claim, in which the hollow cover has a dome-shaped closed end.

**Patentansprüche**

1. Anordnung, die in der Lage ist, einen stumpfen Spleiß zwischen mindestens zwei Lichtwellenleiterkabeln zu umschließen und die folgendes aufweist:

einen hohlen Gegenstand, umfassend eine Basisplatte (1) und eine hohle Abdeckung (2), die von der Basisplatte abnehmbar ist, wobei die Basisplatte mindestens zwei gegenseitig benachbarte Auslässe aufweist, die zur Aufnahme von entsprechenden Lichtwellenleiterkabeln geeignet sind; wobei die Anordnung mindestens einen Lichtwellenleiterorganisator (5) aufweist, der innerhalb des Gegenstandes untergebracht ist, um eine Vielzahl von Lichtwellenleitern auf einer Strecke von einem der Auslässe (3) zu einem anderen der Auslässe (3) unterzubringen, wobei die Strecke einen minimalen Krümmungsradius aufweist, der nicht kleiner ist als der minimale Biegungsradius der Lichtwellenleiter; und

eine erste Einrichtung zur Verbindung der Basisplatte (1) mit der hohlen Abdeckung (2) und eine zweite Einrichtung (7, 9), um zumindest den einen Lichtwellenleiterorganisator mit der Basisplatte (1) zu verbinden, so daß dann, wenn die ersten und zweiten Einrichtungen derart angeschlossen sind, die Lichtwellenleiter in mindestens einer Lagerebene untergebracht sind, dadurch gekennzeichnet, daß dann, wenn die erste Einrichtung abgetrennt ist, die hohle Abdeckung (2) von der Basisplatte (1) abnehmbar ist, indem sie in eine Richtung bewegt wird, die im wesentlichen parallel zur Lagerebene, im wesentlichen parallel zu jeder Auslaßrichtung an der Basisplatte und im wesentlichen senkrecht zur Basisplatte verläuft.

2. Anordnung nach Anspruch 1, bei der die Auslässe rückstellbar sind, wobei die Rückstellung zwischen den Auslässen und den Kabeln, die sie tragen, einen abdichtenden Eingriff bewirkt.

3. Anordnung nach Anspruch 1 oder 2, bei der jeder der Auslässe ein unabhängiges rohrförmiges Teil aufweist.

4. Anordnung nach einem der Ansprüche 1 bis 3, bei der mindestens zwei der Auslässe durch Unterteilung eines einzigen rohrförmigen Teiles ausgebildet sind.

5. Anordnung nach einem der vorherigen Ansprüche, bei der die Auslässe eine selbstheizende Einrichtung mit einer elektrischen Heizeinrichtung aufweisen.

6. Anordnung nach Anspruch 5, bei der die Auslässe ein rückstellbares leitfähiges Polymermaterial aufweisen.

7. Anordnung nach Anspruch 6, bei der das leitfähige Polymermaterial einen positiven Temperaturkoeffizienten im Widerstandsverhalten aufweist.

8. Anordnung nach Anspruch 1, die zusätzlich ein Band aus rückstellbarem Material aufweist, das eine Verbindungslinie zwischen der Basis und der Abdeckung überbrücken kann und mit dem die Basisplatte und die Abdeckung dicht miteinander verbindbar sind.

9. Anordnung nach einem der vorherigen Ansprüche, bei der die Basisplatte eine Einrichtung zur Bildung eines Behälters für ein Einkapselungsmaterial um ein Kabel herum aufweist.

10. Anordnung nach einem der vorherigen Ansprüche, bei der die Basisplatte eine Einrichtung zur elektrischen und/oder mechanischen Verbindung mit einer Kabelaußenabschirmung und/oder einem Verstärkungsteil aufweist.

11. Anordnung nach einem der vorherigen Ansprüche, bei der die Basisplatte eine Einrichtung zur elektrischen und/oder mechanischen Verbindung mit einem Kabelinnenleiter und/oder einem Verstärkungsteil aufweist.

12. Anordnung nach einem der vorherigen Ansprüche, bei der der Lichtwellenleiterorganisator eine oder mehrere Lichtwellenleiter-Trägerplatten aufweist.

13. Anordnung nach Anspruch 12, bei der die Trägerplatten jeweils an einem Träger angelenkt sind, wobei die Schwenkachse im wesentlichen senkrecht zu den Kabeln verläuft, die in die Basisplatte eintreten.

14. Anordnung nach Anspruch 12 oder 13, bei der die Trägerplatten einen ersten Bereich, der eine Schleife eines Lichtwellenleiters aufnehmen kann, und einen zweiten Bereich an einer Kante des ersten Bereiches aufweist, der einen Lichtwellenleiterspleiß aufnehmen kann.

15. Anordnung nach Anspruch 14, bei der der erste Bereich eine Einrichtung zur Positionierung der Schleife aufweist.

16. Anordnung nach Anspruch 14 oder 15, bei der die Trägerplatten zusätzlich einen Spleißhalter aufweisen, der in der Lage ist, einen Lichtwellenleiterspleiß auf dem zweiten Bereich der Trägerplatte zu positionieren.

17. Anordnung nach Anspruch 16, bei der der Spleißhalter zur Halterung von Spleißen unterschiedlicher Ausbildung anpaßbar ist.

18. Anordnung nach einem der vorherigen Ansprüche, bei der die Auslässe sich von der Basisplatte aus so erstrecken, daß sie im wesentlichen parallel zueinander und zur Lagerebene verlaufen.

19. Anordnung nach einem der vorherigen Ansprüche, bei der der Lichtwellenleiterorganisator eine Vielzahl von Trägerplatten aufweist, die mit der Basisplatte in schwenkbarer Weise um eine Vielzahl von im wesentlichen parallelen Schwenkachsen verbunden sind, von denen jede im wesentlichen parallel zur Lagerebene verläuft, wobei jede Trägerplatte in der Lage ist, eine Vielzahl der Lichtwellenleiter in einer Vielzahl von zweiten Ebenen aufzunehmen, die parallel zur Lagerebene verlaufen, wobei die parallelen Schwenkachsen von der Lagerebene aus treppenartig verlaufend angeordnet sind.

20. Anordnung nach Anspruch 19, bei der die parallelen Schwenkachsen im wesentlichen senkrecht zu der Richtung angeordnet sind, in welcher die hohle Abdeckung bewegt wird, wenn sie von der Basisplatte entfernt wird.

21. Anordnung nach einem der vorherigen Ansprüche, bei der jeder Lichtwellenleiterorganisator rechteckig ist, wobei die zweite Einrichtung eine Schmalseite jedes Organisators mit der Basisplatte verbindet.

22. Anordnung nach einem der vorherigen Ansprüche, bei der der Lichtwellenleiterorganisator eine Vielzahl von Trägerplatten aufweist, die längs einer Kante davon so angelenkt sind, daß eine darüberliegende Trägerplatte bewegbar ist, um eine darunterliegende Trägerplatte freizulegen.

23. Anordnung nach Anspruch 12, bei der die Trägerplatte oder die Trägerplatten hochgezogene Kanten aufweisen, um eine bestimmte Trennung zwischen ihnen beizubehalten und ein unbeabsichtigtes Austreten der Lichtwellenleiter über ihre Kanten hinaus zu verhindern.

24. Anordnung nach einem der vorherigen Ansprüche, ferner umfassend einen Trägerplattenträger (7), wobei der Lichtwellenleiterorganisator eine Vielzahl von Trägerplatten (5) aufweist, die an dem Träger angebracht sind, wobei der Träger integral mit der Basisplatte ausgebildet oder an dieser angebracht ist und Befestigungslöcher (8) aufweist, an denen ein Verstärkungskern von einem der Kabel befestigbar ist.

25. Anordnung nach einem der vorherigen Ansprüche, bei der die hohle Abdeckung ein kuppelförmiges geschlossenes Ende aufweist.

**Revendications**

1. Ensemble permettant d'enfermer une jonction bout à bout prévue entre au moins deux câbles de fibres optiques, constitué d'un corps creux comprenant une plaque de base (1) et un couvercle creux (2) séparable de cette plaque de base, cette dernière comportant su moins deux sorties mutuellement contigües susceptibles de recevoir des câbles de fibres optiques particuliers, l'ensemble comportant au moins un dispositif d'organisation de fibres optiques (5) logé à l'intérieur du corps creux et servant à ranger plusieurs fibres optiques suivant un trajet allant de l'une des sorties (3) à une autre de ces sorties (3), ce trajet possédant un rayon minimal de courbure qui n'est pas plus faible que le rayon minimal de flexion des fibres optiques, des premiers moyens servant à rendre la plaque de base (1) solidaire du couvercle creux (2) et des seconds moyens (7, 9) servant à rendre le ou les dispositifs d'organisation de fibres optiques solidaires de la plaque de base (1), de sorte que, lorsque ces premiers et ces seconds moyens sont ainsi solidarisés, les fibres optiques sont rangées suivant au moins un plan de rangement, cet ensemble étant caractérisé en ce que, lorsque les premiers moyens sont désolidarisés, le couvercle creux (2) peut être retiré de la plaque de base (1) en étant déplacé suivant une direction qui est pratiquement parallèle au plan de rangement, pratiquement parallèle à chaque direction de sortie à l'endroit de la plaque de base et pratiquement perpendiculaire à cette plaque de base.

2. Ensemble suivant la revendication 1, dans lequel les sorties sont susceptibles d'un retour élastique, ce retour élastique réalisant une venue en contact d'étanchéité entre les sorties et les câbles qu'elles reçoivent.

3. Ensemble suivant la revendication 1 ou 2, dans lequel chacune des sorties est constituée par une pièce tubulaire indépendante.

4. Ensemble suivant l'une quelconque des revendications 1 à 3, dans lequel au moins deux des sorties sont formées à partir d'une subdivision d'une pièce tubulaire unique.

5. Ensemble suivant l'une quelconque des revendications précédentes, dans lequel les sorties comprennent des moyens de chauffage intégrés constitués par un élément de chauffage électrique.

6. Ensemble suivant la revendication 5, dans lequel les sorties sont constituées par un matériau polymère conducteur susceptible d'un retour élastique.

7. Ensemble suivant la revendication 6, dans lequel le matériau polymère conducteur possède un comportement à coefficient positif de température pour la résistance.

8. Ensemble suivant la revendication 1, qui comprend en outre une bande de matériau susceptible d'un retour élastique qui peut recouvrir une ligne de joint située entre la base et le couvercle et à l'aide de laquelle cette plaque de base et ce couvercle peuvent être rendus étanches entre eux.

9. Ensemble suivant l'une quelconque des revendications précédentes, dans lequel la plaque de base comporte des moyens permettant de former autour d'un câble un réservoir pour un produit d'enrobage.

10. Ensemble suivant l'une quelconque des revendications précédentes, dans lequel la plaque de base comporte des moyens de branchement électrique et/ou mécanique sur un blindage, et/ou élément de renforcement, extérieur de câble.

11. Ensemble suivant l'une quelconque des revendications précédentes, dans lequel la plaque de base comporte des moyens de branchement électrique et/ou mécanique sur un conducteur, ou élément de raidissement, intérieur de câble.

12. Ensemble suivant l'une quelconque des revendications précédentes, dans lequel le dispositif d'organisation de fibres optiques est constitué d'un ou plusieurs plateaux pour fibres optiques.

13. Ensemble suivant la revendication 12, dans lequel les plateaux sont articulés chacun sur un support, la ligne d'articulation s'étendant d'une manière pratiquement perpendiculaire aux câbles pénétrant dans la plaque de base.

14. Ensemble suivant la revendication 12 ou 13, dans lequel les plateaux comprennent une première partie qui peut recevoir une boucle de fibre optique et une seconde partie, située sur un bord de la première partie, qui peut recevoir une jonction de fibres optiques.

15. Ensemble suivant la revendication 14, dans lequel la première partie comporte des moyens pour positionner la boucle.

16. Ensemble suivant la revendication 14 ou 15, dans lequel les plateaux comprennent en outre un porte-jonctions permettant de positionner une jonction de fibres sur la seconde partie du plateau.

17. Ensemble suivant la revendication 16, dans lequel le porte-jonctions est adaptable de façon à maintenir des jonctions d'agencement différent.

18. Ensemble suivant l'une quelconque des revendications précédentes, dans lequel les sorties s'étendent à partir de la plaque de base de façon à être pratiquement parallèles l'une à l'autre et au plan de rangement.

19. Ensemble suivant l'une quelconque des revendications précédentes, dans lequel le dispositif d'organisation des fibres optiques est constitué de plusieurs plateaux reliés à la plaque de base d'une manière pivotante autour de plusieurs lignes pratiquement parallèles dont chacune est pratiquement parallèle au plan de rangement, chaque plateau pouvant servir à ranger plusieurs fibres optiques dans plusieurs plans secondaires qui sont parallèles au plan de rangement, les lignes parallèles de pivotement s'étendant en escalier à partir du plan de rangement.

20. Ensemble suivant la revendication 19, dans lequel chacune des lignes parallèles de pivotement est pratiquement perpendiculaire à la direction suivant laquelle le couvercle creux est déplacé lorsqu'on l'ôte de la plaque de base.

21. Ensemble suivant l'une quelconque des revendications précédentes, dans lequel chaque dispositif d'organisation de fibres optiques est rectangulaire, les seconds moyens réunissant un petit côté d'un tel dispositif d'organisation à la plaque de base.

22. Ensemble suivant l'une quelconque des revendications précédentes, dans lequel le dispositif d'organisation des fibres optiques est constitué de plusieurs plateaux qui sont articulés le long de l'un de leurs côtés de façon qu'on puisse déplacer un plateau situé au-dessus en vue de rendre accessible un plateau situé au-dessous.

23. Ensemble suivant la revendication 12, dans lequel le ou les plateaux comportent des bords surélevés servant à maintenir une certaine distance de séparation entre eux et à empêcher un échappement des fibres hors de leurs bords.

24. Ensemble suivant l'une quelconque des revendications précédentes, comprenant en outre un support de plateaux (7), le dispositif d'organisation de fibres optiques comprenant plusieurs plateaux (5) fixés sur ce support, ce dernier étant venu de matière avec la plaque de base ou étant fixé sur celle-ci et comportant des trous de fixation (8) dans lesquels on peut fixer une âme de raidissement du câble.

25. Ensemble suivant l'une quelconque des revendications précédentes, dans lequel le couvercle creux comporte une extrémité fermée en forme de dôme.

Fig.1.

Fig.2a.

Fig.2b.

*Fig.3.*

*Fig.4.*

*Fig. 5.*

EP 0 159 857 B1

## Fig. 6.

## Fig. 7.

5

# Fig.8a.

# Fig.8b.

Fig.9a.

Fig.9b.

Fig.10a.

Fig.10b.

## Fig.11a.

## Fig.11b.

EP 0 159 857 B1

Fig.12a.

9

# Fig.12b.